# EUROPÄISCHE PATENTSCHRIFT

(11) **EP 0 753 785 B1**
(45) Veröffentlichungstag und Bekanntmachung des Hinweises auf die Patenterteilung: **11.05.2016**
(21) Anmeldenummer: 96110728.1
(22) Anmeldetag: 03.07.1996
(51) Int. Cl.: G02F 1/1337, G02B 5/30

(54) **Übertragung von Polarisationsmustern auf polarisationsempfindliche Photoschichten**
Transfer of polarisation patterns to polarisation sensitive photolayers
Transfert de motifs polarisés à couches sensibles à la polarisation

(30) Priorität: 11.07.1995 CH 203695
(43) Veröffentlichungstag der Anmeldung: 15.01.1997
(73) Patentinhaber: Rolic AG, 6301 Zug (CH)
(72) Erfinder: Seiberle, Hubert, 79576 Weil am Rhein (DE)
(74) Vertreter: Veenstra, Eva

(56) Entgegenhaltungen:
- EP-A- 0 387 059
- EP-A- 0 525 478
- EP-A- 0 632 311
- JAPANESE JOURNAL OF APPLIED PHYSICS, PART 2, LETTERS, Bd. 34, Nr. 6B, 15.Juni 1995, TOKYO JP, Seiten L764-L767, XP002015328 SCHADT ET AL: "Photo-Induced Alignment and Patterning of Hybrid Liquid Crystalline Polymer Films on Single Substrates"
- JAPANESE JOURNAL OF APPLIED PHYSICS, PART 1, Bd. 34, Nr. 6A, Juni 1995, TOKYO JP, Seiten 3240-3249, XP002015329 SCHADT ET AL: "Photo-Generation of Linearly Polymerized Liquid Crystal Aligning Layers Comprising Novel, Integrated Optically Patterned Retarders and Color Filters"
- CONFERENCE ON LASERS AND ELECTRO-OPTICS, 21.Mai 1990, ANAHEIM, CA, US, Seite 354 XP002015330 GUNDERMAN ET AL: "Liquid Crystal Distributed Polarization Rotator for Improved Uniformity of Focused Laser Light"
- OPTICS COMMUNICATIONS, Bd. 32, Nr. 2, Februar 1980, AMSTERDAM NL, Seiten 220-224, XP002015331 KANEKO ET AL: "Liquid Crystal Polarization Rotator: Optical Element for Intermodulation Spatial-Bandwidth Reduction in Holography"
- JAPANESE JOURNAL OF APPLIED PHYSICS, PART 1, Bd. 31, Nr. 7, Juli 1992, TOKYO JP, Seiten 2155-2164, XP002015332 SCHADT ET AL: "Surface-Induced Parallel Alignment of Liquid Crystals by Linearly Polymerized Photopolymers"

## Beschreibung

Die Erfindung betrifft ein verfahren zum Belichten von polarisationsempfindlichen Schichten, wobei optisches Bauelement zur Erzeugung von linear polarisiertem Licht mit vorgegebener Polarisationsrichtung aus einfallendem Licht als Polarisationsmaske eingesetzt wird. Unter dem Begriff "Erzeugung" wird für den Zweck dieser Beschreibung sowohl die eigentliche Erzeugung linear polarisierten Lichts aus unpolarisiertem Licht, als auch die Aenderung der Polarisationsrichtung von bereits linear polarisiert einfallendem Licht verstanden.

In letzter Zeit wurden verschiedene Verfahren und Materialien bekannt, bei denen durch Bestrahlen mit linear polarisiertem Licht anisotrope Materialeigenschaften induziert werden. Durch Lokalisieren des polarisierten Lichts, lässt sich dabei die anisotrope Eigenschaft, bzw. die Vorzugsrichtung des Materials in mikroskopisch kleinen Gebieten variieren. Neben der optischen Anisotropie ist es vor allem die sterische Anisotropie, die diese Materialien für die industrielle Anwendung interessant macht. Durch die sterische Anisotropie eines Polymermaterials werden Flüssigkristalle, die sich mit diesem in Kontakt befinden, entsprechend dessen Vorzugsrichtung orientiert. Damit eignen sich diese photostrukturierbaren Polymeren in hervorragender Weise als Orientierungsschichten für Flüssigkristalle, wobei die Orientierungsrichtung im Mikrometerbereich variiert werden kann.

In der US-A-4,974,941 ist ein Verfahren beschrieben, das auf einem Guest-host System beruht, in dem durch Bestrahlen mit linear polarisiertem Licht geeigneter Wellenlänge durch cis-trans-Isomerisation von Farbstoffen eine Vorzugsrichtung induziert wird. Flüssigkristalle, die mit der Oberfläche einer so belichteten Schicht in Kontakt sind, werden entsprechend dieser Vorzugsrichtung orientiert. Dieser Orientierungsprozess ist reversibel, d.h. durch nochmaliges Bestrahlen der Schicht mit Licht einer zweiten Polarisationsrichtung lässt sich die bereits eingeschriebene Richtung der Orientierung wiederum drehen. Dieser Umorientierungsprozess ist beliebig oft wiederholbar und ist deshalb besonders im Hinblick auf wiederbeschreibbare optische Speicher interessant.

In US-A-5,389,698 sind photostrukturierbare Orientierungsschichten beschrieben, in denen im Gegensatz zu dem vorstehend beschriebenen reversiblen Orientierungsverfahren ein irreversibles anisotropes Polymernetzwerk aufgebaut wird. Die während der Belichtung mit linear polarisiertem Licht in diesem induzierten anisotropen optischen und orientierenden Eigenschaften sind photostabil, lassen sich also durch weitere Belichtungen nicht mehr umorientieren. Diese photoorientierten Polymernetzwerke (PPN) sind deshalb überall dort einsetzbar, wo stabile, strukturierte oder unstrukturierte LC-Orientierungsschichten oder optische Elemente wie nichtabsorptive Farbfilter, lineare und cholesterische Polarisationsfilter, optische Verzögerungsschichten usw. gebraucht werden.

Bei der Belichtung einer photostrukturierbaren Orientierungsschicht müssen i. a. mindestens zwei unterschiedliche Polarisationszustände des Lich-tes verwendet werden, um ein Muster definiert einzuschreiben. Zur Zeit sind verschiedene Belichtungsverfahren bekannt, mit denen Polarisationsmuster in photostrukturierbare Schichten eingeprägt werden können. Alle bekannten Verfahren haben den Nachteil, dass die Gesamtinformation nicht parallel, sondern seriell, bzw. in mehr als einem Belichtungsschritt übertragen werden muss. Die bekannten Verfahren sind daher aufwendig, teuer und zeitraubend.

So ist es möglich, mit einer Scanvorrichtung die Information punktweise auf die photostrukturierbare Schicht zu bringen. Dabei kann die Polarisationsrichtung von Punkt zu Punkt geändert werden. Bei der Uebertragung hochinformativer Muster steht pro Bildpunkt allerdings nur eine sehr kurze Belichtungszeit zur Verfügung, um eine akzeptable Gesamtbelichtungszeit für das Muster nicht zu überschreiten. Dies hat zur Folge, dass die für die Orientierung notwendige Energie innerhalb kurzer Zeit auf einen kleinen Bereich der Schicht gebracht werden muss, was hohe Anforderungen an die thermische Belastbarkeit des photostrukturierbaren Materials stellt.

Eine weitere Möglichkeit, welche in US 5,389,698 beschrieben ist, besteht darin, die Schicht durch eine Maske hindurch mit polarisiertem Licht zu bestrahlen. Auf diese Weise können alle Gebiete einer Schicht mit gleicher Orientierungsrichtung simultan belichtet werden. Durch die Verwendung weiterer Masken lassen sich auf diese Weise viele verschiedene Orientierungsrichtungen in eine Schicht einschreiben. Für jede Orientierungsrichtung ist bei diesem Verfahren ein Belichtungsschritt notwendig, wobei jeweils die Durchlassrichtung des Polarisationsfilters neu eingestellt, sowie die Maske gewechselt und positioniert werden muss. Insbesondere ist das Positionieren der Maske mit erheblichem Zeitaufwand verbunden.

Da bei diesem stufenweisen Belichtungsverfahren jeder Maske eine bestimmte Durchlassrichtung des Polarisators zugeordnet ist, kann der Polarisator selbst Teil der Maske sein. Eine solche polarisierende Maske kann auf verschiedene Weise durch bekannte Technologien hergestellt werden, z.B. durch auflaminieren eines Filmes auf eine Polarisationsfolie. Eine Verbesserung einer solchen polarisierenden Maske wäre die Integration aller benötigten Polarisationsrichtungen in eine einzelne Maske, wodurch die Uebertragung eines kompletten Polarisationsmusters auf eine photostrukturierbare Schicht in einem einzigen Belichtungsschritt möglich wäre. In EP-A-632 311 ist eine solche Polarisationsmaske zur Herstellung von LC-Orientierungsschichten erwähnt, jedoch fehlt der Hinweis, wie eine solche Polarisationsmaske hergestellt werden könnte. Tatsächlich führt das bei der Herstellung von Polarisationsfolien übliche Streckverfahren zwangsläufig zu einer einheitlichen Polarisationsrichtung über grosse Flächen.

In US-A-5,327,285 ist ein Verfahren beschrieben, mit dem Polarisatoren mit zwei im Mikrometerbereich gebietsweise unterschiedlichen Polarisationsrichtungen hergestellt werden. Das Verfahren beruht auf derTechnologie zur Herstellung von Polarisationsfolien Durch chemische oder mechanische Bearbeitung werden dabei die Polarisationseigenschaften zweier Polarisationsfolien gebielsweise ausgelöscht und um 90° gegeneinander verdreht passgenau zusammengeklebt. Durch die hohen Anforderungen beim Positionieren und Zusammenlegen der beiden Folien können die unterschiedlich polarisierenden Gebiete jedoch nicht beliebig Klein gemacht werden. Zudem beschränken Parallaxenfehler, die durch das Aufeinanderstapeln der relativ dicken Polarisationsfolien auftreten, die Anzahl möglicher Polarisationsrichtungen auf zwei.

Der Erfindung liegt die Aufgabe zugrunde, ein Verfahren bereitzustellen, mit dem ein Potarisations-Orientierungsmuster in einem einzigen Belichtungsschritt in eine polarisationsempfindliche Schicht eingeschrieben werden kann.

Erfindungsgemäss wird dies durch das in Anspruch 1 beschriebene Verfahren erreicht. Bevorzugte Ausführungsformen des Verfahrens sind in den abhängigen Ansprüchen beschrieben.

Gemäß der Erfindung wird eine Flüssigkristallschicht in gebietsweise unterschiedliche Richtungen so orientiert, dass auftreffendes Licht nach Hindurchtreten durch die Flüssigkristallschicht polarisiert ist, wobei die Polarisationsebene des Lichtes entsprechend dem Orientierungsmuster variiert.

Eine bevorzugte Möglichkeit dafür besteht darin, dass die Bereiche unterschiedliches optisches Drehvermögen aufweisen, so dass in diesen Bereichen die Polarisationsebene von einfallendem linear polarisiertem Licht um voneinander verschiedene Winkel verdreht wird. Unter dem Begriff "Drehvermögen" wird für den Zweck dieser Beschreibung sowohl die Fähigkeit verdrillter Flüssigkristalle, die Polarisationsrichtung des Lichts zu drehen, als auch die Erzeugung einer anderen Polarisationsrichtung durch Doppelbrechung verstanden.

Die Orientierung der Flussigkristallschicht kann entweder permanent durch eine entsprechend strukturierte Orientierungsschicht oder dynamisch in einer mit Elektroden versehenen Flüssigkristallzelle vorgegeben werden. Im letzteren Fall kann das Orientierungsmuster sehr einfach durch elektrische Ansteuerung der einzelnen Bildpunkte verandert werden. Durch die Schaltbarkeit dieser Polarisationsmasken wird eine hohe Flexibilität erreicht, die es erlaubt, Masken in Bruchteilen von Sekunden computergesteuert zu ändern. Dadurch wird die schnelle Uebertragung von individueller Information, wie z.B. Text, Nummern oder Bildern möglich.

Dagegen kann die permanente Vorgabe des Polarisationsmusters entweder durch eine vernetzte Flüssigkristallschicht auf einem einzelnen mit der Orientierungsschicht versehenen Substrat erreicht werden, oder durch eine Flüssigkristallzelle, wobei zumindest eine der beiden Orientierungsschichten der Flüssigkristallzelle strukturiert orientiert sein muss.

Da die Polarisationsrichtung bei Polarisationsmasken mit permanentem Polarisationsmuster Pixel für Pixel beliebig einstellbar ist, bietet sich deren Verwendung insbesondere dort an, wo Muster mit mehr als zwei verschiedenen Polarisationstichtungen übertragen werden sollen. Um die dafür notwendige strukturierte Orientierung zu erzeugen, können verschiedene Technologien eingesetzt werden. Vorzugsweise wird man auch hier photostrukturierbare Materialien einsetzen, die durch Masken mit Licht verschiedener Polarisationsrichtung belichtet werden. Ferner können für diesen einmaligen Prozess der Polarisationsmaskenherstellung auch Technologien verwendet werden, die für Serienproduktionen von Orientierungsschichten zu aufwendig wären, wie z.B. das Reiben in verschiedene Richtungen, wobei die nicht zu reibenden Gebiete abgedeckt sind, oder das Einprägen eines Orientierungsmusters mit einem mechanischen Stempel.

Bei der Belichtungen mit einer Polarisationmaskes kann die Polarisation des auftreffenden Lichts entweder durch einen herkömmlichen, vor der Flüssigkristall schicht angeordneten Polarisator mit einheitlicher Durchlassrichtung, oder durch dotieren der Flüssigkristallschicht mit dichroitischen Molekülen werden. Die Wahl der dichroitischen Moleküle richtet sich dabei nach der spektralen Empfindlichkeit des photostrukturierbaren Materials.

Im folgenden werden Ausführungsbeispiele der Erfindung anhand der beiliegenden Zeichnungen beschrieben. Es zeigen
Fig.1 eine Anordnung zur Herstellung einer Schicht aus LC-Monomeren, mit gebielsweise unterschiedlicher Orientierung.
Fig. 2 eine Anordnung, in der die gemäss Fig. 1 hergestellte Schicht als Doppelbrechungsmaske eingesetzt wird
Fig. 3 eine Anordnung, in der eine strukturiert orientierte LC-Zelle als polarisationsdrehende maske eingesetzt wird
Fig. 4 eine elektrisch schaltbare, polarisationsdrehende Maske.

### Bespiel 1

### Herstellung einer photostrukturierten PPN-Schicht

Als PPN-Material kommen z.B. Zimtsäurederivate in Frage. Für die Beispiele mit PPN-Schichten wurde ein Material mit hohem Glaspunkt (Tg=133°C) ausgewählt: Photopolymer:

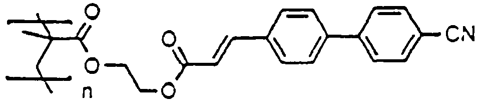

Das PPN-Material wurde zu 5% in NMP gelöst. Diese Lösung wurde dann verwendet, um durch Spincoating bei 2000 Upm eine PPN-Schicht auf einer Glasplatte aufzubringen. Die Schicht wurde danach 2 Stunden bei 130°C auf einer Wärmebank und weitere 4 Stunden bei 130°C in Vakuum getrocknet. Anschliessend wurde die Schicht 5 Minuten mit dem linear polarisierten Licht einer 200W Hg-Höchstdrucklampe bei Raumtemperatur belichtet. Danach liess sich die Schicht als Orientierungsschicht für Flüssigkristalle einsetzen.

### Beispiel 2

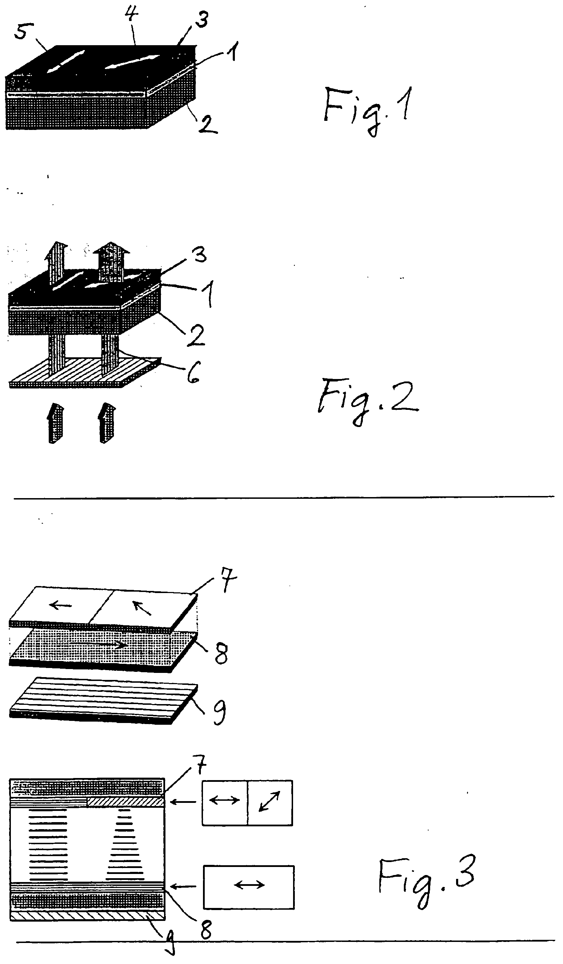

### Herstellung einer Schicht aus vernetzten LC-Monomeren (vgl. Fig. 1)

Eine PPN-Schicht 1 wurde wie in Beispiel 1 präpariert, wobei als Substrat 2 eine Platte aus UV-durchlässigem Borosilikatglas verwendet wurde. Die Polarisationsrichtung des UV-Lichtes wurde bei der Bestrahlung der linken und rechten Plattenhälfte um 45° gegeneinander verdreht.

Wie in der noch unveröffentlichten Patentanmeldung RAN 4701/152 beschrieben, wurde eine Mischung aus vernetzbaren LC-Monomeren zu 20% in Anisol gelöst und bei Raumtemperatur durch Spincoating auf die belichtete PPN-Schicht aufgebracht.

Zur photoinduzierten Vernetzung wurde die Schicht dann im Vakuum mit isotropem Licht einer 150W Xenonlampe für 30 Minuten bestrahlt. Die vernetzte Flüssigkristallschicht (LCP) 3 war gegenüber mechanischer, thermischer und UV-Belastung stabil. Betrachtete man die vernetzte Schicht unter gekreuzten Polarisatoren, so erkannte man dass sie doppelbrechend war. Die optischen Achsen 4, 5 der linken und rechten Plattenhälfte bildeten einen Winkel von 45°. Die Flüssigkristalle hatten die Orientierung der PPN-Schicht übernommen und diese während des Vernetzungsprozesses beibehalten.

### Beispiel 3

### Belichtung einer PPN-Schicht mit einer Doppelbrechungsmaske (vgl. Fig. 2)

Die optische Verzögerung der in Beispiel 2 hergestellten Schicht betrug im Bereich der 336 nm Quecksilberlinie ca. 170 nm. Diese Platte 1, 2, 3 wurde nun als Doppelbrechungsmaske auf eine mit dem PPN-Material beschichtete Glasplatte so gelegt, dass sich die Schichtseiten berührten. Anschliessend wurde die PPN-Schicht durch die Doppelbrechungsmaske hindurch mit polarisiertem UV-Licht 6 der Wellenlänge 336 nm während 5 Minuten bestrahlt. Die Polarisationsrichtung des UV-Lichtes wurde parallel zur optischen Achse der linken Hälfte der Doppelbrechungsmaske eingestellt. Dadurch blieb die Polarisationsrichtung des UV-Lichtes beim Durchtritt durch die linke Hälfte der Doppelbrechungsmaske erhalten, während die rechte Plattenhälfte als λ/2 Verzögerungsplatte wirkte und deshalb die Polarisationsrichtung um 90° drehte.

Nach der Belichtung wurde auf die PPN-Schicht wie in Beispiel 2 eine Flüssigkristallschicht durch Spincoating aufgebracht. Mit Hilfe eines Kippkompensators wurde festgestellt, dass die Flüssigkristalle auf der linken und rechten Plattenhälfte in der Plattenebene senkrecht zueinander standen.

Analog lassen sich Doppelbrechungsmasken herstellen, die die Polarisationsebene des einfallenden Lichtes um weniger als 90° drehen. Dafür muss der Winkel zwischen den unterschiedlich orientierten optischen Achsen kleiner als 45° eingestellt werden. Auf diese Weise lassen sich auch Polarisationsmasken verwirklichen, die viele Gebiete mit jeweils voneinander verschiedener Richtung der optischen Achsen aufweisen.

### Beispiel 4

### Strukturiert orientierte LC-Zelle als polarisationsdrehende Maske (vgl. Fig. 3)

Wie in Beispiel 2 wurde eine PPN-beschichtete Borosilikatglasplatte 7 mit linear polarisiertem UV-Licht bestrahlt, wobei zwischen der Bestrahlung der linken und rechten Plattenhälfte die Polarisationsrichtung des UV-Lichtes um 45° gedreht wurde. Auf eine zweite Borosilikatglasplatte 8 wurde eine Orientierungsschicht aus Polyimid aufgebracht und diese parallel zur Längskante mit einem Tuch gerieben. Beide Glasplatten wurden nun so zu einer 6 µm dicken LC-Zelle zusammengebaut, dass die linke Hälfte der PPN-Platte zusammen mit der Polyimidplatte eine Parallelzelle bildete. Entsprechend bildeten die Orientierungsrichtungen der rechten PPN-Hälfte und der Polyimidschicht einen Winkel von 45°. Anschliessend wurde die Zelle mit einem nematischen Flüssigkristall gefüllt. Ordnete man auf der Rückseite der Polyimid-beschichteten Glasplatte einen Polarisator 9 mit seiner Durchlassrichtung parallel zur Reibrichtung an, so war die linke Hälfte der Zelle maximal dunkel, wenn man die Durchlassrichtung eines darüber gehaltenen Analysator senkrecht zu der des Polarisators anordnete. Die rechte Zellenhälfte wurde dagegen maximal dunkel, wenn man den Analysator um 45° verdrehte. Die Polarisationsebene des einfallenden Lichtes blieb demnach beim Durchtritt durch die linke Zellenhälfte erhalten, während sie in der rechten Hälfte um 45° gedreht wurde.

Diese Zelle wurde nun mit der PPN-Seite auf eine weitere PPN-beschichtete Glasplatte montiert. Durch die Zelle hindurch wurde nun die PPN-Schicht mit parallel zur Polyimidreibrichtung polarisiertem UV-Licht bestrahlt. Danach wurde auf die PPN-Schicht eine Flüssigkristallschicht durch Spincoating aufgebracht. Betrachtete man diese Schicht unter gekreuzten Polarisatoren, so sah man, dass der Flüssigkristall orientiert war, wobei sich die Orientierungsrichtung zwischen der linken und rechten Plattenhälfte um 45° unterschied.

### Beispiel 5

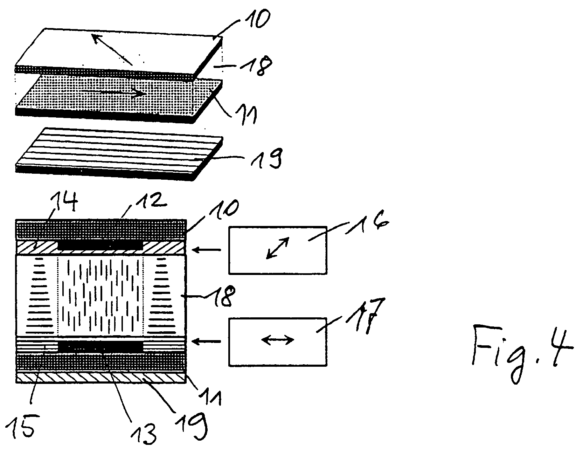

### Elektrisch schaltbare, polarisationsdrehende Maske (vgl. Fig. 4)

Auf zwei Glasplatten 10, 11 aus Borosilikat, die mit 1x1 cm grossen ITO-Elektroden 12, 13 versehen waren, wurden durch Spincoating Polyimidschichten 14, 15 aufgebracht. Durch Reiben der Polyimidschichten mit einem Tuch wurde auf jeder Platte eine Orientierungsrichtung 16, 17 vorgegeben. Die Reibrichtung unterschied sich bei den beiden Platten um 45°. Die Platten wurden dann mit Hilfe eines 6 µm dicken Spacers so zu einer Flüssigkristallzelle montiert, dass die beiden Elektrodenflächen überlappten. Danach wurde die Zelle mit einer nematischen Flüssigkristallmischung 18 gefüllt. Durch die unterschiedlichen Wandorientierungen entstand eine Drehzelle mit einer Verdrillung von 45°.

Ordnete man die Durchlassrichtung eines Polarisators 19 auf der Unterseite der Zelle parallel zur Reibrichtung der unteren Platte an, so musste ein über der Zelle angebrachter Analysator um 45° verdreht werden, um die maximale Helligkeit zu erhalten. Drehte man den Analysator um weitere 90°, so wurde die Zelle maximal dunkel. Legte man nun an die beiden ITO-Elektroden eine ausreichend grosse Spannung, so orientierten sich die Flüssigkristallmoleküle im Bereich der Elektrodenfläche mit ihrer Längsachse senkrecht zur Glasoberfläche. Das transmittierte Licht behielt nun in diesem Bereich die durch den Polarisator vorgegebene Polarisationsrichtung bei, d.h. der Analysator musste parallel zum Polarisator eingestellt werden um die maximale Helligkeit zu erhalten.

Diese Zelle wurde nun auf eine PPN-beschichtete Glasplatte montiert. Auf der Rückseite der Zelle wurde ein Polarisator mit der Durchlassrichtung parallel zur Reibrichtung der dem Polarisator zugewandten Glasplatte angebracht. Während die PPN-Schicht dann durch Polarisator und Zelle hindurch belichtet wurde, blieb die Zelle angesteuert. Nach der Bestrahlung wurde auf die PPN-Schicht eine Flüssigkristallschicht durch Spincoating aufgebracht. Ordnete man diese Schicht dann unter gekreuzten Polarisatoren an, so sah man, dass der Flüssigkristall orientiert war. Die Orientierungsrichtung des Bereiches, der durch den geschalteten Teil der Flüssigkristallzelle belichtet wurde, unterschied sich dabei von der Richtung in den übrigen Bereichen um 45°.

### Beispiel 6

### LCP-Polarisator

Wie in Beispiel 2 wurde eine PPN-Schicht auf einer Borosilikatglasplatte durch Bestrahlen mit polarisiertem Licht in der linken Hälfte parallel und in der rechten Hälfte unter 45° zur Längskante orientiert.

Eine Mischung aus vernetzbaren LC-Monomeren wurde mit 3% des folgenden Cyanoterphenyl-Moleküls dotiert.

Cyanoterphenyl:

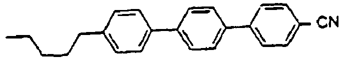

Cyanoterphenyl wurde gewählt, weil das Maximum der Absorption bei der gleichen Wellenlänge liegt wie das des verwendeten PPN-Materials (λₘₐₓ=310nm). Die dotierte Mischung wurde zu 40% in Anisol gelöst und bei Raumtemperatur durch Spincoating auf die belichtete PPN-Schicht aufgebracht. Die Flüssigkristalle übernahmen die durch die PPN-Belichtung vorgegebene Orientierung und behielten diese auch nach der anschliessenden Vernetzung bei. Die Cyanoterphenyle hätten sich entsprechend der Flüssigkristallmatrix orientiert, was sich dadurch zeigte, dass die bei 310 nm parallel zum Direktor gemessene Transmission 20 mal kleiner war als senkrecht dazu. Da die verwendeten vernetzbaren Flüssigkristallmoleküle im Bereich oberhalb 300 nm nicht zur Absorption beitragen, ist dies auf den Dichroismus der Cyanoterphenyle zurückzuführen.

Die so hergestellte Platte wurde als Polarisationsmaske mit der Schichtseite nach unten auf eine PPN-beschichtete Glasplatte montiert und von der Maskenseite her mit isotropem UV-Licht bestrahlt. Danach wurde auf die PPN-Schicht eine Flüssigkristallschicht durch Spincoating aufgebracht. Ordnete man diese Schicht dann unter gekreuzten Polarisatoren an, so sah man, dass der Flüssigkristall orientiert war, wobei die Orientierungsrichtung auf der linken und rechten Plattenhälfte um 45° voneinander verschieden waren.

Durch die Verwendung einer LCP-Polarisationsmaske zur Erzeugung von Orientierungsmustern in photoempfindlichen Materialien kann auf einen externen Polarisator verzichtet werden. Die Polarisation sowie die Festlegung der Polarisationsebene wird Pixel für Pixel von der Polarisationsmaske übernommen.

### Beispiel 7

### Strukturiert orientierte Flüssigkristallzelle als Polarisationsmaske

Wie in Beispiel 2 wurde eine PPN-Schicht auf einer Borosilikatglasplatte durch Bestrahlen mit polarisiertem Licht in der linken Hälfte parallel und in der rechten Hälfte unter 45° zur Längskante orientiert.

Auf eine zweite Borosilikatglasplatte wurde eine Orientierungsschicht aus Polyimid aufgebracht und diese parallel zur Längskante mit einem Tuch gerieben. Beide Glasplatten wurden nun so zu einer 6 µm dicken LC-Zelle zusammengebaut, dass die linke Hälfte der PPN-Platte zusammen mit der Polyimidplatte eine Parallelzelle bildete. Entsprechend bildeten die Orientierungsrichtungen der rechten PPN-Hälfte und der Polyimidschicht einen Winkel von 45°. Anschliessend wurde die Zelle mit einer Flüssigkristallmischung gefüllt, die mit 1% Cyanoterphenyl dotiert war. Ordnete man auf der Rückseite der Polyimid-beschichteten Glasplatte einen Polarisator mit seiner Durchlassrichtung parallel zur Reibrichtung an, so war die linke Hälfte der Zelle maximal dunkel, wenn man die Durchlassrichtung eines darüber gehaltenen Analysators senkrecht zu der des Polarisators anordnete. Die rechte Zellenhälfte wurde dagegen maximal dunkel, wenn man den Analysator um 45° verdrehte. Die Polarisationsebene des einfallenden Lichtes blieb beim Durchtritt durch die linke Zellenhälfte unverändert, während sie beim Durchtritt durch die rechte Hälfte um 45° gedreht wurde.

Diese Zelle wurde nun mit der PPN-Seite auf eine weitere PPN-beschichtete Glasplatte montiert. Durch die Zelle hindurch wurde nun die PPN-Schicht mit isotropem UV-Licht bestrahlt. Danach wurde auf die PPN-Schicht eine Flüssigkristallschicht durch Spincoating aufgebracht. Ordnete man diese Schicht dann unter gekreuzten Polarisatoren an, so sah man, dass der Flüssigkristall orientiert war, und zwar war die Orientierungsrichtung in der linken und rechten Plattenhälfte um 45° verschieden. Dieses Beispiel zeigt, dass die Belichtung mit einer strukturiert orientierten LCD-Polarisationsmaske keinen zusätzlichen externen Polarisator erfordert.

### Beispiel 8

### Selbstpolarisierende, schaltbare LCD-Maske

Auf einer Glasplatte aus Borosilikat, wurden auf einer Fläche von 1 cm² Fingerelektroden aus ITO präpariert. Die Breite der Elektrodenbahnen, die parallel zur Plattenkante angeordnet waren, betrug 20 µm, der Abstand zwischen den Bahnen 40 µm. Anschliessend wurde darüber eine Polyimidschicht aufgebracht und diese unter 45° zur Richtung der Elektrodenbahnen mit einem Tuch gerieben. Eine zweite Borosilikatplatte ohne Elektrode wurde ebenfalls mit Polyimid beschichtet und unter 45° zur Längskante so gerieben, dass nach dem Zusammenbau der beiden Platten eine Parallelzelle entstand. Als Plattenabstand wurden 6 µm gewählt. Eine nematische Flüssigkristallmischung mit negativ dielektrischer Anisotropie wurde mit 1% Cyanoterphenyl dotiert und in die Zelle gefüllt. Legte man eine ausreichend hohe Spannung an die Fingerelektroden, so orientierten die Moleküle in der Nähe der Elektrodenplatte parallel zu den Elektrodenbahnen. Dadurch nahm der Flüssigkristall im Bereich der Fingerelektroden eine um 45° verdrillte Struktur an, während im nicht geschalteten Bereich ausserhalb der Elektroden die parallele Konformation erhalten blieb.

Diese Zelle wurde nun auf eine PPN-beschichtete Glasplatte montiert. Durch die geschaltete Zelle hindurch wurde dann die PPN-Schicht mit isotropem UV-Licht bestrahlt. Danach wurde auf die PPN-Schicht eine Flüssigkristallschicht durch Spincoating aufgebracht. Ordnete man diese Schicht dann unter gekreuzten Polarisatoren an, so sah man, dass der Flüssigkristall orientiert war, und zwar war die Orientierungsrichtung im Bereich der durch die Fläche mit Fingerelektroden abgedeckt war gegenüber dem Aussenbereich um 45° verschieden. Auch bei dieser Ausführung wird kein externer Polarisator benötigt. Das UV-Licht wird durch die dotierte Flüssigkristallmischung polarisiert, wobei die Polarisationsebene durch Ansteuern der Zelle um 45° geschaltet werden kann. Dadurch ist ein Wechsel der Maske zwischen dem Uebertragen unterschiedlicher Information nicht mehr nötig.

## Patentansprüche

1. Verfahren zur Übertragung eines Polarisationsmusters auf eine polarisationsempfindliche fotostrukturierbare Schicht in einem einzigen Belichtungsschritt unter Verwendung eines optischen Bauelements, bei welchem Bauelement zur Erzeugung von linear polarisiertem Licht mit vorgegebener Polarisationsrichtung aus einfallendem Licht, lichtausgangsseitig gegeneinander abgegrenzte Bereiche vorhanden sind, die zumindest zeitweise unterschiedliche Polarisationsrichtungen aufweisen,
**dadurch gekennzeichnet, dass** das optische Bauelement eine Flüssigkristallschicht (3, 18) umfasst, die in gebietsweise unterschiedliche Richtungen so orientiert ist oder wird, dass auftreffendes Licht nach Hindurchtreten durch die Flüssigkristallschicht polarisiert ist, wobei die Polarisationsebene des Lichtes entsprechend dem Orientierungsmuster der Flüssigkristallschicht variiert.

2. Verfahren nach Anspruch 1, **dadurch gekennzeichnet, dass** die Bereiche des optischen Bauelements unterschiedliches optisches Drehvermögen aufweisen, so dass in diesen Bereichen die Polarisationsebene von einfallendem linear polarisiertem Licht um voneinander verschiedene Winkel verdreht wird.

3. Verfahren nach einem der vorhergehenden Ansprüche, **dadurch gekennzeichnet, dass** die Bereiche des optischen Bauelements Linearpolarisatoren mit voneinander verschiedenen Polarisationsrichtungen sind.

4. Verfahren nach Anspruch 3, **dadurch gekennzeichnet, dass** dichroitische Moleküle in der Flüssigkristallschicht eingebettet sind.

5. Verfahren nach einem der vorhergehenden Ansprüche, **dadurch gekennzeichnet, dass** sich die Flüssigkristallschicht in einer Flüssigkristallzelle befindet und ein- oder beidseitig durch Orientierungsschichten (7, 8, 10, 11) orientiert wird.

6. Verfahren nach Anspruch 1, **dadurch gekennzeichnet, dass** die Flüssigkristallschicht optisch anisotrop ist, wobei sich die Richtungen der durch die Orientierungsrichtungen des Flüssigkristalls vorgegeberen optischen Achsen in mindestens zwei Gebieten innerhalb der Schichtebene voneinander unterscheiden, und wobei der optische Gangunterschied des Bauelementes ungefähr λ(n+1/2) beträgt, wobei λ die Lichtwellenlänge angibt, auf die das Bauelement abgestimmt ist und n=0,1,2..., d.h. eine ganze Zahl ist.

7. Verfahren nach einem der Ansprüche 1 oder 2, **dadurch gekennzeichnet, dass** sich beim optischen Bauelement die Flüssigkristallschicht zwischen zwei mit Orientierungsschichten (7, 8, 10, 11) versehenen transparenten Platten befindet, wobei die Orientierungsrichtungen der beiden Platten mindestens in einem gegenüberliegenden Gebiet gegeneinander verdreht sind, wodurch eine Verdrillung des Flüssigkristalls und demzufolge durch Lichtführung die Polarisationsebene von linear polarisiertem Licht gedreht wird.

8. Verfahren nach einem der Ansprüche 4 oder 7, **dadurch gekennzeichnet, dass** mindestens eines der beiden Substrate, die mit dem Flüssigkristall in Kontakt sind, Elektroden aufweist, wodurch der Flüssigkristall durch Anlegen einer ausreichenden Spannung deformiert werden kann.

9. Verfahren nach Anspruch 8, **dadurch gekennzeichnet, dass** die Elektroden zumindest teilweise als Fingerelektroden ausgebildet sind, wodurch der Flüssigkristall beim Anlegen einer Spannung planar deformiert wird.

10. Verfahren nach einem der Ansprüche 4, oder 7 - 9, **dadurch gekennzeichnet, dass** der Flüssigkristall gebietsweise um einen beliebigen Winkel zwischen 0° und einem vielfachen von 360 ° verdrillt ist.

11. Verfahren nach einem der Ansprüche 4, oder 7 - 9, **dadurch gekennzeichnet, dass** der Flüssigkristall gebietsweise um einen beliebigen Winkel zwischen 0° und 180° verdrillt ist.

12. Verfahren nach einem der Ansprüche 4, oder 7 - 9, **dadurch gekennzeichnet, dass** der Flüssigkristall gebietsweise unterschiedlich verdrillt ist.

13. Verfahren nach Anspruch 12, **dadurch gekennzeichnet, dass** sich die Verdrillung mindestens zweier Gebiete um (n*90°+ 45°) unterscheidet, wobei n eine positive oder negative ganze Zahl oder 0 ist.

14. Verfahren nach Anspruch 12, **dadurch gekennzeichnet, dass** sich die Verdrillung mindestens zweier Gebiete um (n*180°+ 90°) unterscheidet, wobei n eine positive oder negative ganze Zahl oder 0 ist.

15. Verfahren nach einem der Ansprüche 3, 4, 6-14, **dadurch gekennzeichnet, dass** die gebietsweise unterschiedliche Orientierung der Flüssigkristallschicht durch mindestens eine Orientierungsschicht (1), die ein lokal variierendes Orientierungsmuster aufweist, verursacht wird.

16. Verfahren nach Anspruch 15, **dadurch gekennzeichnet, dass** die Orientierungsschicht photostrukturiert ist.

17. Verfahren nach Anspruch 16, **dadurch gekennzeichnet, dass** die photostrukturierte Orientierungsschicht aus einem photoorientierten Polymernetzwerk besteht.

18. Verfahren nach einem der Ansprüche 1 - 8 oder 10 - 17, **dadurch gekennzeichnet, dass** die Flüssigkristallschicht aus vernetzten Flüssigkristallen besteht.

19. Verfahren nach Anspruch 15-17 in verbindung mit Anspruch 18, **dadurch gekennzeichnet, dass** die Schichtstruktur aus Orientierungs- und vernetzte Flüssigkristall-Schicht nur einseitig in Kontakt mit einem transparenten Substrat ist.

20. Verfahren nach Anspruch 19, **dadurch gekennzeichnet, dass** sich die Orientierungsrichtungen gebietsweise um einen beliebigen Winkel zwischen 0 und 180° unterscheiden.

## Claims

1. A method for transmitting a polarization pattern on a polarization-sensitive photo-structurable layer in a single exposure step using an optical component, in which component for producing linearly polarized light with a predetermined polarization direction from incident light, comprises on the light output side zones which are delimited from each other and which exhibit at least temporarily different polarization directions,
**characterized in that** the optical component comprises a liquid crystal layer (3, 18), which is or will be oriented in zonewise different directions such that incident light is polarized by passing through the liquid crystal layer, wherein the polarization plane of light varies according to the orientation pattern of the liquid crystal layer.

2. The method according to claim 1, **characterized in that** the areas of the optical component have different optical rotatory power, so that in these areas, the polarization plane of incident linearly polarized light is rotated of by angles different from each other.

3. The method according to any one of the preceding claims, **characterized in that** the areas of the optical component are linear polarizers with mutually different polarization directions.

4. The method according to claim 3, **characterized in that** dichroic molecules are embedded in the liquid crystal layer.

5. The method according to any one of the preceding claims, **characterized in that** the liquid crystal layer is in a liquid crystal cell and one or both sides is oriented by the orientation layers (11, 7, 8, 10).

6. The method according to claim 1, **characterized in that** the liquid crystal layer is optically anisotropic wherein the directions predetermined by the orientation directions of the liquid crystal optical axes differ from each other within the plane of the layer in at least two areas, and wherein the optical path difference of the component is about λ ( n + 1/2), wherein λ indicates the wavelength of light to which the device is tuned, and n = 0,1,2 ..., i.e. is an integer.

7. The method according to any one of claims 1 or 2, **characterized in that** in the optical device, the liquid crystal layer is located between two transparent plates with alignment layers (7, 8, 10, 11), wherein the orientation directions of the two plates are rotated against each other at least in one opposing area, thereby twisting of the liquid crystal and accordingly rotating the polarization plane of linearly polarized light by wave guiding.

8. The method according to any one of claims 4 or 7, **characterized in that** at least one of the two substrates that are in contact with the liquid crystal, have an electrode whereby the liquid crystal can be deformed by applying a sufficient voltage.

9. The method according to claim 8, **characterized in that** the electrodes are at least partially formed as finger electrodes, whereby the liquid crystal is deformed planar when a voltage is applied.

10. The method according to claim 4, or 7-9, **characterized in that** the liquid crystal is zonewise, twisted by any angle between 0 ° and a multiple of 360 °.

11. The method according to claim 4, or 7-9, **characterized in that** the liquid crystal is zonewise, twisted by any angle between 0 ° and 180 °.

12. The method according to claim 4, or 7-9, **characterized in that** the liquid crystal is zonewise, twisted differently.

13. The method according to claim 12, **characterized in that** the twisting of at least two areas differ by (n * 90 ° + 45 °), wherein n is a positive or negative integer or 0.

14. The method according to claim 12, **characterized in that** the twisting of at least two areas differ by (n * 180 °+ 90 °), wherein n is a positive or negative integer or 0.

15. The method according to claim 3, 4, 6-14, **characterized in that** the zonewise different orientation directions of the liquid crystal layer is caused by at least one alignment layer (1) having a locally varying orientation pattern.

16. The method according to claim 15, **characterized in that** the alignment layer is photostructured.

17. The method according to claim 16, **characterized in that** the photostructured orientation layer consists of a photo-oriented polymer network.

18. The method according to any one of claims 1-8 or 10-17, **characterized in that** the liquid crystal layer consists of cross-linked liquid crystals.

19. The method according to claim 15-17 in combination with claim 18, **characterized in that** the layer structure of orientation- and cross-linked liquid crystal layer is in contact with a transparent substrate only on one side.

20. The method of claim 19, **characterized in that** some regions differ the orientation directions at any angle between 0 and 180 °.

## Revendications

1. Procédé pour transmettre un motif de polarisation sur une couche photosensible sensible à la polarisation dans une étape d'exposition unique à l'aide d'un composant optique, dans lequel le composant pour produire une lumière polarisée linéairement ayant une direction prédéterminée de polarisation de la lumière incidente, le côté de sortie de lumière contre chacune des zones délimitées sont présents qui, au moins par intermittence différentes directions de polarisation exposition,
**caractérisé en ce que** le composant optique comprend une couche de cristaux liquides (3, 18), l'autre dans des directions régionales est orientée ou est que la lumière incidente est polarisée par le passage à travers la couche de cristaux liquides, le plan de polarisation de la lumière varie en fonction de la configuration de l'orientation de la couche de cristaux liquides.

2. Procédé selon la revendication 1, **caractérisé en ce que** les zones du composant optique ont différentes pouvoir rotatoire optique, de sorte que dans ces zones, le plan de polarisation est tourné de la lumière incidente polarisée linéairement à des angles différents les uns des autres.

3. Procédé selon l'une quelconque des revendications précédentes, **caractérisé en ce que** les surfaces des composants optiques polariseurs linéaires avec mutuellement différentes directions de polarisation.

4. Procédé selon la revendication 3, **caractérisé en ce que** des molécules dichroïques sont noyées dans la couche de cristaux liquides.

5. Procédé selon l'une quelconque des revendications précédentes, **caractérisé en ce que** la couche de cristal liquide se trouve dans une cellule à cristaux liquides et un ou les deux côtés est orienté par les couches d'orientation (11, 7, 8, 10).

6. Le procédé selon la revendication 1, **caractérisé en ce que** la couche de cristal liquide optiquement anisotrope dans lequel les directions de l'prédéterminée par les directions d'orientation des axes optiques du cristal liquide diffèrent l'une de l'autre dans le plan de la couche dans au moins deux zones, et dans lequel la différence de chemin optique du composant sur λ ( n + 1/2), dans lequel λ indique la longueur d'onde de la lumière à laquelle le dispositif est accordé, et n = 0,1,2 ..., à savoir est un nombre entier.

7. Procédé selon l'une quelconque des revendications 1 ou 2, **caractérisé en ce que** le dispositif optique, la couche de cristaux liquides disposée entre deux couches d'alignement (7, 8, 10, 11) des plaques transparentes est situé, les directions d'orientation des deux plaques, au moins dans une zone opposée sont mis en rotation par rapport à l'autre, ainsi la torsion du cristal liquide et, par conséquent, le plan de polarisation est tourné lumière polarisée linéairement par le guide de lumière.

8. Procédé selon l'une quelconque des revendications 4 ou 7, **caractérisé en ce que** au moins un des deux substrats qui sont en contact avec les cristaux liquides, comportant des électrodes de sorte que le cristal liquide peut être déformée par l'application d'une tension suffisante.

9. Procédé selon la revendication 8, **caractérisé en ce que** les électrodes sont au moins partiellement réalisés sous la forme d'un doigt, ce qui électrodes du cristal liquide lorsqu'une tension est déformée plane.

10. Procédé selon la revendication 4 ou 7-9, **caractérisé en ce que** le cristal liquide est aménage, tordue à un angle quelconque entre 0 ° et un multiple de 360 °.

11. Procédé selon la revendication 4 ou 7-9, **caractérisé en ce que** le cristal liquide est aménage, tordu à un angle quelconque entre 0 ° et 180 °.

12. Procédé selon la revendication 4 ou 7-9, **caractérisé en ce que** le cristal liquide est aménage, torsadée différemment.

13. Procédé selon la revendication 12, **caractérisé en ce que** la torsion des au moins deux zones dans l'ordre (n * 90 °+ 45 °), où n est un nombre entier positif ou négatif ou 0.

14. Procédé selon la revendication 12, **caractérisé en ce que** la torsion des au moins deux zones à (n * 180 ° + 90 °), où n est un nombre entier positif ou négatif ou 0.

15. Procédé selon la revendication 3, 4, 6 à 14, **caractérisé en ce que** la zone, l'orientation différente de la couche de cristal liquide par au moins une couche d'alignement (1) ayant un motif d'orientation variable localement est provoquée.

16. Procédé selon la revendication 15, **caractérisé en ce que** la couche d'alignement est photo-structuré.

17. Procédé selon la revendication 16, **caractérisé en ce que** la couche d'orientation photostructurée compose d'un réseau polymère photo-orienté.

18. Procédé selon l'une quelconque des revendications 1-8 ou 10-17, **caractérisé en ce que** la couche de cristal liquide est constitué de cristaux liquides réticulés.

19. Procédé selon la revendication 15 à 17 en combinaison avec la revendication 18, **caractérisé en ce que** la structure de couche de la couche d'orientation de cristaux liquides et réticulée sur un seul côté est en contact avec un substrat transparent.

20. Procédé selon la revendication 19, **caractérisé en ce que** certaines régions, diffèrent les directions d'orientation à un angle quelconque entre 0 et 180 °.
